(19) Europäisches Patentamt
European Patent Office
Office européen des brevets

(11) **EP 1 223 416 B1**

(12) **EUROPÄISCHE PATENTSCHRIFT**

(45) Veröffentlichungstag und Bekanntmachung des Hinweises auf die Patenterteilung:
**31.07.2002   Patentblatt 2002/31**

(51) Int Cl.⁷: **G01J 3/28**

(21) Anmeldenummer: **00123824.5**

(22) Anmeldetag: **02.11.2000**

(54) **Spektrale Bandbreitenkalibrierung eines optischen Spektrumanalysators**

Spectral bandwidth calibration of an optical spectrum analyser

Calibrage en largeur de bande spectrale d'un analyseur de spectre optique

(84) Benannte Vertragsstaaten:
**DE FR GB IT**
Benannte Erstreckungsstaaten:
**AL LT LV MK RO SI**

(43) Veröffentlichungstag der Anmeldung:
**17.07.2002   Patentblatt 2002/29**

(73) Patentinhaber: **Acterna Eningen GmbH**
**72800 Eningen (DE)**

(72) Erfinder:
• **Fuhrmann, Thomas, Dr.-Ing.**
**72800 Eningen (DE)**

• **Steininger, Klaus, Dipl.-Ing.**
**72800 Eningen (DE)**

(74) Vertreter: **KOHLER SCHMID + PARTNER**
**Patentanwälte**
**Ruppmannstrasse 27**
**70565 Stuttgart (DE)**

(56) Entgegenhaltungen:
**EP-A- 0 098 443      EP-A- 0 961 107**

**Beschreibung**

Die Erfindung betrifft ein Verfahren zum Feststellen von Meßabweichungen eines optischen Spektrumanalysators anhand von mindestens einer Referenzlinie bekannter Wellenlänge und bekannter spektraler Bandbreite sowie einen zum Durchführen dieses Verfahrens geeigneten optischen Spektrumanalysator.

Es ist bekannt, daß bei optischen Spektrumanalysatoren (OSA) die Wellenlängenanzeige während des Betriebs mit einem Referenzelement nachkalibriert wird, da sich aufgrund von Alterung, Temperatur, Schock und anderen Einflüssen während des Betriebs die angezeigte Wellenlänge ändert.

Aus der EP 0 758 075 A1 ist es bekannt, ein optisches Spektrometer mit Hilfe einer oder mehreren Referenzlinien bezüglich der absoluten Wellenlänge zu kalibrieren. Diese Referenzlinien sind Minima in einem Referenzspektrum und sehr stabil. Als Referenzlinien werden hier Gasabsorptionslinien verwendet.

Eine andere Möglichkeit der absoluten Wellenlängenkalibrierung wird in US 5,838,437 beschrieben. Hier wird die absolute Wellenlängenkalibrierung mittels temperaturstabilisierter Fabry-Perot-Filter und Fasergitter durchgeführt.

Diese bekannten Verfahren kalibrieren den OSA nur bezüglich der absoluten Wellenlänge. Es ist aber möglich, daß sich aufgrund von mechanischen Toleranzen, Temperaturänderung, Schocks, Alterung oder anderen Einflüssen die spektrale Bandbreite des OSAs ändert. Diese Änderungen werden von den bekannten Kalibrierverfahren nicht erfaßt.

Eine nicht genau bekannte spektrale Bandbreite verursacht jedoch Meßfehler bei der Messung des OSNR (Optical Signal to Noise Ratio) in optischen Systemen. Bei OSNR mißt man üblicherweise zwischen einem modulierten Laser und Rauschen (Noise). Für identische Messungen sind identische optische Bandbreiten erforderlich. Da unterschiedliche OSAs meist unterschiedliche spektrale Bandbreiten besitzen, wird die spektrale Bandbreite üblicherweise auf 0,1 nm normiert (wobei eine Umrechnung der Rauschleistung zwischen tatsächlicher Bandbreite und 0,1 nm erforderlich ist). Dabei wird als spektrale Bandbreite die Wellenlängendifferenz der Punkte bezeichnet, bei denen die gemessene Leistung um 3 dB vom Maximalwert zu höherer bzw. zu niedriger Wellenlänge abgefallen ist. Ändert sich während des Betriebs die tatsächliche spektrale Bandbreite des OSAs, so wird ein falsches OSNR ermittelt.

Es ist daher die Aufgabe der Erfindung, ein Verfahren zur spektralen Bandbreitenkalibrierung von optischen Spektrumanalysatoren während des Betriebs anzugeben und einen entsprechenden optischen Spektrumanalysator bereitzustellen.

Diese Aufgabe wird erfindungsgemäß dadurch gelöst, daß aus der bekannten spektralen Bandbreite der mindestens einen Referenzlinie und aus der mit dem optischen Spektrumanalysator gemessenen spektralen Bandbreite der mindestens einen Referenzlinie die jeweilige spektrale Bandbreite des optischen Spektrumanalysators bei der Wellenlänge der mindestens einen Referenzlinien ermittelt wird. Vorzugsweise werden mehrere spektrale Bandbreiten des optischen Spektrumanalysators anhand von mehreren Referenzlinien bekannter Wellenlänge und bekannter Wellenlängenbandbreite ermittelt.

Die gemessene spektrale Bandbreite $\Delta\lambda_{Mi}$ einer Referenzlinie i (i = 1,2,..) errechnet sich näherungsweise aus der spektralen Bandbreite $\Delta\lambda_{Ri}$ dieser Referenzlinie und aus der spektralen Bandbreite $\Delta\lambda_{OSi}$ des optischen Spektrumanalysators zu:

$$\Delta\lambda_{Mi} = \sqrt{\Delta\lambda_{Ri}^2 + \Delta\lambda_{OSi}^2} \qquad (i = 1,2,...),$$

und damit die spektrale Bandbreite $\Delta\lambda_{OSi}$ des optischen Spektrumanalysators bei der Referenzlinie zu:

$$\Delta\lambda_{OSi} = \sqrt{\Delta\lambda_{Mi}^2 - \Delta\lambda_{Ri}^2} \qquad (i = 1,2,...).$$

Der mit der Erfindung erzielte Vorteil besteht darin, daß spektrale Bandbreitenänderungen während des Betriebs festgestellt und durch passende Nachkalibrierung während des Betriebs berücksichtigt werden können. So lassen sich Fehlmessungen von optischen Spektren vermeiden.

Das erfindungsgemäße Verfahren der Bandbreitenkalibrierung ist auf alle Arten von optischen Spektrumanalysatoren anwendbar, wie z.B.

- Gitter mit Einzeldetektor, wobei das Spektrum durch Änderung einer mechanischen Größe, z.B. Drehung des Gitters, aufgenommen wird;
- Gitter mit Detektorarray, wobei jedes Element des Arrays einen Punkt des Spektrums aufnimmt; oder
- Fabry-Perot-Resonator, dessen Länge durchstimmbar ist und dadurch das Spektrum abgetastet wird.

Die Referenzlinien im Referenzspektrum können entweder als Maxima oder Minima vorliegen.

Die bei den Referenzlinien ermittelten spektralen Bandbreiten können entweder als Kalibrierdaten des optischen Spektrumanalysators gespeichert und daher bei jeder Messung sofort berücksichtigt werden. Alternativ kann ein mit dem optischen Spektrumanalysator gemessenes Meßspektrum auch erst nachträglich anhand der bei den Referenzlinien ermittelten spektralen Bandbreiten korrigiert werden.

Sind die spektralen Bandbreiten $\Delta\lambda_{Ri}$ der Referenzlinien i (i = 1,2,...,n) wesentlich schmaler als ihre gemessenen spektralen Bandbreiten $\Delta\lambda_{Mi}$, d.h. bei $\Delta\lambda_{Ri} < \Delta\lambda_{Mi}$, kann die jeweilige spektrale Bandbreite $\Delta\lambda_{OSi}$ des optischen Spektrumanalysators näherungsweise gleich der gemessenen spektralen Bandbreite $\Delta\lambda_{Mi}$ der i.ten Referenzlinie gesetzt werden. Anderenfalls, d.h. bei $\Delta\lambda_{Ri} \geq \Delta\lambda_{Mi}$, kann die spektrale Bandbreite des optischen Spektrumanalysators z.B. durch Deconvolution ermittelt werden.

Die spektralen Bandbreiten bei anderen Wellenlängen können durch Interpolation bzw. Extrapolation der ermittelten spektralen Bandbreiten ermittelt werden. Die Messung des Referenzspektrums und die Messung des Meßspektrums können gleichzeitig oder nacheinander erfolgen.

Der erfindungsgemäße optische Spektrumanalysator zum Durchführen des oben beschriebenen Verfahrens umfaßt eine Referenzlichtquelle, ein erstes Speichermittel zum Speichern der spektralen Bandbreiten von bekannten Referenzlinien der Referenzlichtquelle, ein spektrales Bandbreiten-Bestimmungsmittel zum Bestimmen der mit dem Spektrometer gemessenen spektralen Bandbreiten der Referenzlinien und ein spektrales Bandbreiten-Ermittlungsmittel zum Ermitteln der spektralen Bandbreiten des optischen Spektrumanalysators aus den bekannten spektralen Bandbreiten der Referenzlinien und aus den mit dem optischen Spektrumanalysator gemessenen spektralen Bandbreiten der Referenzlinien bei den jeweiligen Wellenlängen der Referenzlinien.

In einer bevorzugten Ausführungsform des erfindungsgemäßen optischen Spektrumanalysators ist ein zweites Speichermittel vorgesehen, das die ermittelten spektralen Bandbreiten des optischen Spektrumanalysators bei den jeweiligen Wellenlängen der Referenzlinien speichert. Zwischenwerte und Randwerte können durch Inter- und Extrapolation der ermittelten spektralen Bandbreiten gewonnen werden.

Bevorzugt sind in dem zweiten Speichermittel anfänglich die spektralen Bandbreiten aus einer Werkskalibrierung gespeichert, die dann aufgrund der neu gewonnenen spektralen Bandbreiten neu berechnet und entsprechend verändert werden.

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigt:

Fig. 1    einen erfindungsgemäßen optischen Spektrumanalysator, dessen spektrale Bandbreite mittels eines optischen Referenzspektrums kalibriert wird;

Fig. 2    in einem schematischen Diagramm die Abhängigkeit der spektralen Bandbreite des optischen Spektrumanalysators von der Wellenlänge;

Fig. 3    einen erfindungsgemäßen optischen Spektrumanalysator mit zwei getrennten Pfaden für das Referenz- und das Meßspektrum; und

Fig. 4    einen erfindungsgemäßen optischen Spektrumanalysator mit einem gemeinsamen Pfad für das Referenz- und das Meßspektrum.

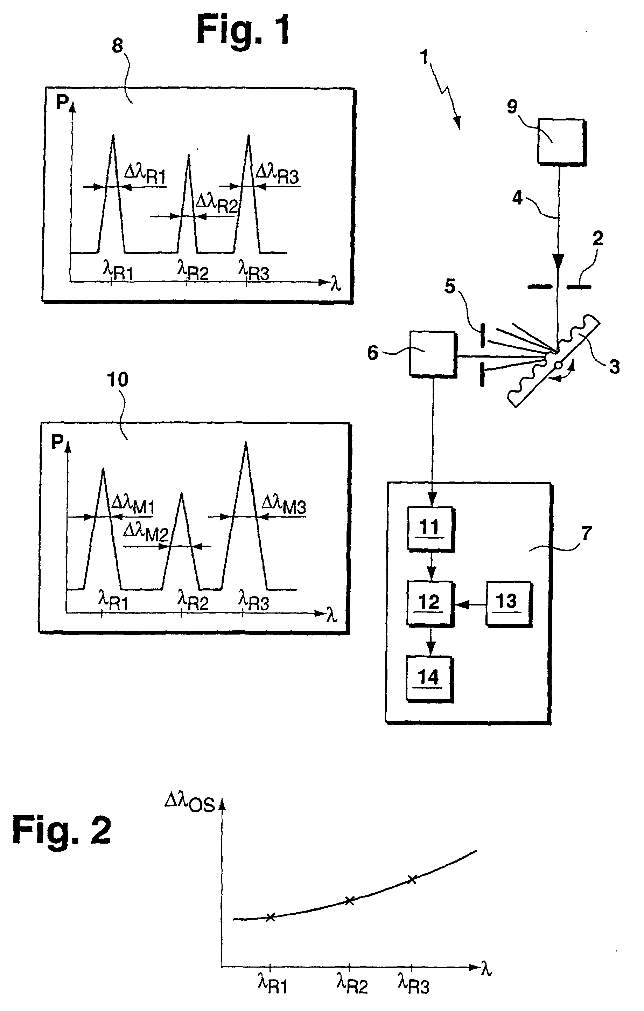

Bei dem in **Fig. 1** insgesamt mit **1** bezeichneten optischen Spektrumanalysator wird das durch einen Eingangsspalt **2** auf ein drehbares Beugungselement (Reflexionsgitter) **3** einfallende Licht **4** gebeugt, wodurch das Licht in seine Wellenlängenanteile räumlich zerlegt wird. Das räumlich zerlegte Licht wird auf einen als räumliches Filter für das gebeugte Licht wirkenden Ausgangsspalt **5** gerichtet, so daß nur der in den passenden Raumwinkel gebeugte Wellenlängenanteil zu einem Photodetektor **6** durchgelassen wird. Das elektrische Ausgangssignal des Photodetektors 6 wird einer Kalibriereinrichtung **7** zugeführt, um ein gemessenes optisches Spektrum anhand von einer oder mehreren Referenzlinien bezüglich der Wellenlänge zu kalibrieren.

Die Kalibrierung erfolgt mit Hilfe des optischen Referenzspektrums **8** einer Referenzlichtquelle **9** mit Referenzlinien, deren Wellenlängen $\lambda_{R1}$, $\lambda_{R2}$, $\lambda_{R3}$ und spektrale Bandbreiten $\Delta\lambda_{R1}$, $\Delta\lambda_{R2}$, $\Delta\lambda R3$ jeweils bekannt sind. Im Referenzspektrum 8 ist die Leistung **P** über der Wellenlänge $\lambda$ aufgetragen. Das Referenzspektrum 8 wird dem optischen Spektrumanalysator 1 als einfallendes Licht 4 zugeführt und so mit dem Photodetektor 6 das optische Spektrum **10** gemessen, in welchem die gemessenen spektralen Bandbreiten der Referenzlinien mit $\Delta\lambda_{M1}$, $\Delta\lambda_{M2}$, $\Delta\lambda_{M3}$ bezeichnet sind. Diese gemessenen spektralen Bandbreiten $\Delta\lambda_{Mi}$ ergeben sich aus der spektralen Bandbreite $\Delta\lambda_{Ri}$ der jeweiligen Referenzlinie i (i = 1,2,3) und der spektralen Bandbreite $\Delta\lambda_{OSi}$ des optischen Spektrumanalysator 1 bei der jeweiligen Wellenlänge $\lambda_{Ri}$ näherungsweise nach folgender Gleichung:

$$\Delta\lambda_{Mi} = \sqrt{\Delta\lambda_{Ri}{}^2 + \Delta\lambda_{OSi}{}^2} \qquad (i = 1,2,3),$$

und damit die spektrale Bandbreite $\Delta\lambda_{OSi}$ des optischen Spektrumanalysators 1 zu:

$$\Delta\lambda_{OSi} = \sqrt{\Delta\lambda_{Mi}{}^2 - \Delta\lambda_{Ri}{}^2} \qquad (i = 1,2,3).$$

In der Kalibriereinrichtung 7 werden mit einem spektralen Bandbreiten-Bestimmungsmittel **11** die gemessenen spektralen Bandbreiten $\Delta\lambda_{Mi}$ ermittelt und mit einem spektralen Bandbreiten-Ermittlungsmittel **12** aus den in einem Speichermittel **13** gespeicherten bekannten spektralen Bandbreiten $\Delta\lambda_{R1}$, $\Delta\lambda_{R2}$, $\Delta\lambda_{R3}$ der

Referenzlinien die spektralen Bandbreiten $\Delta\lambda_{OS1}$, $\Delta\lambda_{OS2}$, $\Delta\lambda_{OS3}$ des optischen Spektrumanalysators 1 für jede Referenzlinie nach der oben genannten Gleichung errechnet. Diese Abhängigkeit der spektralen Bandbreiten $\Delta\lambda_{OS1}$, $\Delta\lambda_{OS2}$, $\Delta\lambda_{OS3}$ des optischen Spektrumanalysators 1 von der Wellenlänge $\lambda$ ist in **Fig. 2** schematisch dargestellt und wird als Kalibrierkurve in einem Speichermittel **14** der Kalibriereinrichtung 7 gespeichert. Die dargestellten Zwischenwerte und Randwerte sind durch Inter- und Extrapolation der ermittelten spektralen Bandbreiten gewonnen. Bei der Messung eines optischen Spektrums wird diese Kalibrierkurve dann berücksichtigt.

Als Referenzlichtquelle 9 kann eine Lichtquelle mit einem breitbandigen Spektrum verwendet werden, wobei ein oder mehrere wellenlängenselektive Elemente nachgeschaltet sind wie z.B. Absorptionszellen, temperaturstabilisierte Fabry-Perot-Interferometer oder temperaturstabilisierte Fasergitter. Es kann aber auch eine schmalbandige Lichtquelle verwendet werden, die in der Wellenlänge stabilisiert ist.

Die Bandbreitenkalibrierung ist nicht auf den Gitter-OSA der Fig. 1 beschränkt, sondern ist auf alle Arten von optischen Spektrumanalysatoren anwendbar.

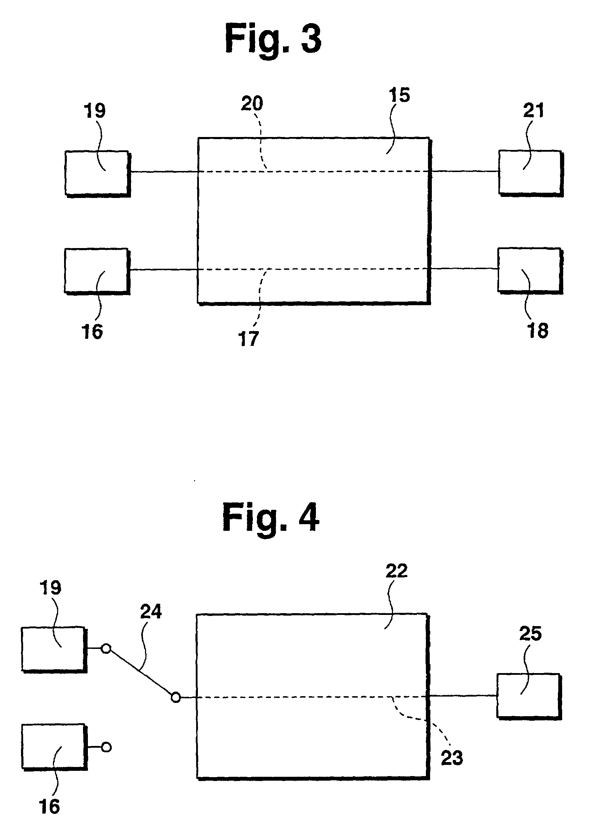

**Fig. 3** zeigt einen optischen Spektrumanalysator **15** mit zwei voneinander getrennten Pfaden für das Referenz- und das Meßspektrum. Das Referenzspektrum **16** wird auf dem Referenzpfad **17** zum Empfänger **18** und ein Meßspektrum **19** auf dem Meßpfad **20** zum Empfänger **21** geführt. Diese Anordnung ermöglicht die gleichzeitige Messung von Referenz- und Meßspektrum 16, 19 durch den optischen Spektrumanalysator 15.

**Fig. 4** zeigt einen optischen Spektrumanalysator **22** mit einem einzigen Pfad **23** für das Referenz- und das Meßspektrum. Zwischen Referenz- und Meßspektrum 16, 19 wird mittels eines Umschalters **24** ausgewählt und so das jeweilige Spektrum auf dem Pfad 23 durch den optischen Spektrumanalysator 22 bis zum gemeinsamen Empfänger **25** geführt.

Bei einem optischen Spektrumanalysator 1 werden zum Feststellen von Meßabweichungen anhand von Referenzlinien bekannter Wellenlänge $\lambda_{R1}$, $\lambda_{R2}$, ..., $\lambda_{Rn}$ und bekannter spektraler Bandbreite $\Delta\lambda_{R1}$, $\Delta\lambda_{R2}$, ..., $\Delta\lambda_{Rn}$ aus den bekannten spektralen Bandbreiten $\Delta\lambda_{R1}$, $\Delta\lambda_{R2}$, ..., $\Delta\lambda_{Rn}$ der Referenzlinien und aus den mit dem optischen Spektrumanalysator 1 gemessenen spektralen Bandbreiten $\Delta\lambda_{M1}$, $\Delta\lambda_{M2}$, ..., $\Delta\lambda_{Mn}$ der Referenzlinien die jeweiligen spektralen Bandbreiten $\Delta\lambda_{OS1}$, $\Delta\lambda_{OS2}$, ..., $\Delta\lambda_{OSn}$ des optischen Spektrumanalysators 1 bei den Wellenlängen $\lambda_{R1}$, $\lambda_{R2}$, ..., $\lambda_{Rn}$ der Referenzlinien ermittelt und als Kalibrierdaten verwendet.

## Patentansprüche

1. Verfahren zum Feststellen von Meßabweichungen eines optischen Spektrumanalysators (1; 15; 22), anhand von mindestens einer Referenzlinie bekannter Wellenlänge ($\lambda_{Ri}$) und bekannter spektraler Bandbreite ($\Delta\lambda_{Ri}$), **dadurch gekennzeichnet,** **daß** aus der bekannten spektralen Bandbreite ($\Delta\lambda_{Ri}$) der mindestens einen Referenzlinie und aus der mit dem optischen Spektrumanalysator (1; 15; 22) gemessenen spektralen Bandbreite ($\Delta\lambda_{Mi}$) der mindestens einen Referenzlinie die jeweilige spektrale Bandbreite ($\Delta\lambda_{OSi}$) des optischen Spektrumanalysators (1; 15; 22) bei der Wellenlänge ($\lambda_{Ri}$) der mindestens einen Referenzlinie ermittelt wird.

2. Verfahren nach Anspruch 1, **dadurch gekennzeichnet, daß** mehrere spektrale Bandbreiten ($\Delta\lambda_{OS1}$, $\Delta\lambda_{OS2}$, ..., $\Delta\lambda_{OSn}$) des optischen Spektrumanalysators (1; 15; 22) anhand von mehreren Referenzlinien bekannter Wellenlänge ($\lambda_{R1}$, $\lambda_{R2}$, ..., $\lambda_{Rn}$) und bekannter spektraler Bandbreite ($\Delta\lambda_{R1}$, $\Delta\lambda_{R2}$, ..., $\Delta\lambda_{Rn}$) ermittelt werden.

3. Verfahren nach Anspruch 1 oder 2, **dadurch gekennzeichnet, daß** die bei der Referenzlinie bzw den Referenzlinien ermittelte(n) spektrale(n) Bandbreite(n) ($\Delta\lambda_{OS1}$, $\Delta\lambda_{OS2}$, ..., $\Delta\lambda_{OSn}$) als Kalibrierdaten des optischen Spektrumanalysators (1; 15; 22) gespeichert werden.

4. Verfahren nach Anspruch 1 oder 2, **dadurch gekennzeichnet, daß** ein mit dem optischen Spektrumanalysator (1; 15; 22) gemessenes optisches Spektrum nachträglich anhand der bei den Referenzlinien ermittelten spektralen Bandbreiten ($\Delta\lambda_{OS1}$, $\Delta\lambda_{OS2}$, ..., $\Delta\lambda_{OSn}$) korrigiert wird.

5. Verfahren nach einem der vorhergehenden Ansprüche, **dadurch gekennzeichnet, daß** bei $\Delta\lambda_{Ri} < \Delta\lambda_{Mi}$ (i = 1,2,...,n) die jeweilige spektrale Bandbreite ($\Delta\lambda_{OSi}$) des optischen Spektrumanalysators (1; 15; 22) näherungsweise gleich der gemessenen spektralen Bandbreite ($\Delta\lambda_{Mi}$) der i.ten Referenzlinie gesetzt wird.

6. Verfahren nach einem der Ansprüche 1 bis 4, **dadurch gekennzeichnet, daß** bei $\Delta\lambda_{Ri} \geq \Delta\lambda_{Mi}$ (i = 1,2, ..., n) die jeweilige spektrale Bandbreite ($\Delta\lambda_{OSi}$) des optischen Spektrumanalysators (1; 15; 22) durch Deconvolution ermittelt wird.

7. Verfahren nach einem der vorhergehenden Ansprüche, **dadurch gekennzeichnet, daß** die spektralen Bandbreiten bei anderen Wellenlängen durch Interpolation bzw. Extrapolation der ermittelten spektralen Bandbreiten ($\Delta\lambda_{OS1}$, $\Delta\lambda_{OS2}$, ..., $\Delta\lambda_{OSn}$) ermittelt werden.

8. Verfahren nach einem der vorhergehenden Ansprüche, **dadurch gekennzeichnet, daß** die Messung des Referenzspektrums und die Messung des Meßspektrums gleichzeitig oder nacheinander erfolgen.

9. Verfahren nach einem der vorhergehenden Ansprüche, **dadurch gekennzeichnet, daß** die Referenzlinie bzw. Referenzlinien im Referenzspektrum als Minima oder Maxima vorliegen.

10. Optischer Spektrumanalysator (1; 15; 22), zum Durchführen des Verfahrens nach einem der vorhergehenden Ansprüche,
    **gekennzeichnet durch**
    eine Referenzlichtquelle (9);
    ein erstes Speichermittel (13) zum Speichern der spektralen Bandbreiten ($\Delta\lambda_{R1}$, $\Delta\lambda_{R2}$, ..., $\Delta\lambda_{Rn}$) von einer oder mehreren bekannten Referenzlinien der Referenzlichtquelle (9);
    ein spektrales Bandbreiten-Bestimmungsmittel (11) zum Bestimmen der mit dem optischen Spektrumanalysator
    (1; 15; 22) gemessenen spektralen Bandbreiten ($\Delta\lambda_{M1}$, $\Delta\lambda_{M2}$, ..., $\Delta\lambda_{Mn}$) der Referenzlinien; und
    ein spektrales Bandbreiten-Ermittlungsmittel (12) zum Ermitteln der spektralen Bandbreiten ($\Delta\lambda_{OS1}$, $\Delta\lambda_{OS2}$, ..., $\Delta\lambda_{OSn}$) des optischen Spektrumanalysators (1; 15; 22) aus den bekannten spektralen Bandbreiten ($\Delta\lambda_{R1}$, $\Delta\lambda_{R2}$, ..., $\Delta\lambda_{Rn}$) der Referenzlinien und aus den mit dem optischen Spektrumanalysator (1; 15; 22) gemessenen spektralen Bandbreiten ($\Delta\lambda_{M1}$, $\Delta\lambda_{M2}$, ..., $\Delta\lambda_{Mn}$) der Referenzlinien bei den jeweiligen Wellenlängen ($\lambda_{R1}$, $\lambda_{R2}$, ..., $\lambda_{Rn}$) der Referenzlinien.

11. Optischer Spektrumanalysator nach Anspruch 10, **gekennzeichnet durch** ein zweites Speichermittel (14) zum Speichern der ermittelten spektralen Bandbreiten ($\Delta\lambda_{OS1}$, $\Delta\lambda_{OS2}$, ..., $\Delta\lambda_{OSn}$) des optischen Spektrumanalysators (1; 15; 22) bei den jeweiligen Wellenlängen ($\lambda_{R1}$, $\lambda_{R2}$, ..., $\lambda_{Rn}$) der Referenzlinien.

12. Optischer Spektrumanalysator nach Anspruch 11, **dadurch gekennzeichnet, daß** in dem zweiten Speichermittel (14) anfänglich die spektralen Bandbreiten aus einer Werkskalibrierung gespeichert sind.

**Claims**

1. Method for determining measurement tolerances of an optical spectrum analyzer (1;15;22) by means of at least one reference line of a known wavelength ($\lambda_{Ri}$) and known spectral bandwidth ($\Delta\lambda_{Ri}$), **characterized in that** from the known spectral bandwidth ($\Delta\lambda_{Ri}$) of the at least one reference line and from the spectral bandwidth ($\Delta\lambda_{Mi}$) of the at least one reference line measured with the optical spectrum analyzer (1;15;22), the respective spectral bandwidth ($\Delta\lambda_{OSi}$) of the optical spectrum analyzer (1;15;22) is determined at the wavelength ($\lambda_{Ri}$) of the at least one reference line.

2. Method according to claim 1, **characterized in that** several spectral bandwidths ($\Delta\lambda_{OS1}$, $\Delta\lambda_{OS2}$, ..., $\Delta\lambda_{OSn}$) of the optical spectrum analyzer (1;15;22) are determined by means of several reference lines of known wavelength ($\lambda_{R1}$, $\lambda_{R2}$, ..., $\lambda_{Rn}$) and known spectral bandwidth ($\Delta\lambda_{R1}$, $\Delta\lambda_{R2}$, ..., $\Delta\lambda_{Rn}$).

3. Method according to claim 1 or 2, **characterized in that** the spectral bandwidths ($\Delta\lambda_{OS1}$, $\Delta\lambda_{OS2}$, ..., $\Delta\lambda_{OSn}$) determined at the reference line or reference lines are stored as calibration data of the optical spectrum analyzer (1;15;22).

4. Method according to claim 1 or 2, **characterized in that** an optical spectrum measured with the optical spectrum analyzer (1;15;22) is corrected subsequently by means of the spectral bandwidths ($\Delta\lambda_{OS1}$, $\Delta\lambda_{OS2}$, ..., $\Delta\lambda_{OSn}$) determined at the reference lines.

5. Method according to any one of the preceding claims, **characterized in that** for $\Delta\lambda_{Ri} < \Delta\lambda_{Mi}$ (i = 1,2,..., n), the respective spectral bandwidth ($\Delta\lambda_{OSi}$) of the optical spectrum analyzer (1;15;22) is set approximately equal to the measured spectral bandwidth ($\Delta\lambda_{Mi}$) of the $i^{th}$ reference line.

6. Method according to any one of the claims 1 through 4, **characterized in that** for $\Delta\lambda_{Ri} \geq \Delta\lambda_{Mi}$ (i = 1, 2,...,n) the respective spectral bandwidth ($\Delta\lambda_{OSi}$) of the optical spectrum analyzer (1;15;22) is determined through deconvolution.

7. Method according to any one of the preceding claims, **characterized in that** the spectral bandwidths at other wavelengths are determined through interpolation or extrapolation of the determined spectral bandwidths ($\Delta\lambda_{OS1}$, $\Delta\lambda_{OS2}$, ..., $\Delta\lambda_{OSn}$ ).

8. Method according to any one of the preceding claims, **characterized in that** the measurement of the reference spectrum and the measurement of the measurement spectrum are carried out simultaneously or one after another.

9. Method according to any one of the preceding claims, **characterized in that** the reference line or reference lines in the reference spectrum are present in the form of a minimum or maximum.

**10.** Optical spectrum analyzer (1;15;22) for carrying out the method according to any one of the preceding claims, **characterized by** a reference light source (9);

a first storage means (13) for storing the spectral bandwidths ($\Delta\lambda_{R1}$, $\Delta\lambda_{R2}$, ..., $\Delta\lambda_{Rn}$) of one or more known reference lines of the reference light source (9);

a spectral bandwidth determination means (11) for determining the spectral bandwidths ($\Delta\lambda_{M1}$, $\Delta\lambda_{M2}$, ...., $\Delta\lambda_{Mn}$) of the reference lines measured with the optical spectrum analyzer (1;15;22); and

a spectral bandwidth determination means (12) for determining the spectral bandwidths ($\Delta\lambda_{OS1}$, $\Delta\lambda_{OS2}$ ,...., $\Delta\lambda_{OSn}$) of the optical spectrum analyzer (1;15;22) from the known spectral bandwidths ($\Delta\lambda_{R1}$, $\Delta\lambda_{R2}$, ....., $\Delta\lambda_{Rn}$) of the reference lines and from the spectral bandwidths ($\Delta\lambda_{M1}$, $\Delta\lambda_{M2}$, ....., $\Delta\lambda_{Mn}$) of the reference lines at the respective wavelengths ($\lambda_{R1}$, $\lambda_{R2}$, ...., $\lambda_{Rn}$) of the reference lines, measured with the optical spectrum analyzer (1;15;22).

**11.** Optical spectrum analyzer according to claim 10, **characterized by** a second storage means (14) for storing the determined spectral bandwidths ($\Delta\lambda_{OS1}$, $\Delta\lambda_{OS2}$, ...., $\Delta\lambda_{OSn}$) of the optical spectrum analyzer (1;15;22) at the respective wavelengths ($\lambda_{R1}$, $\lambda_{R2}$, ..., $\lambda_{Rn}$) of the reference lines.

**12.** Optical spectrum analyzer according to claim 11, **characterized in that** initially, the spectral bandwidths from manufacturer calibration are stored in the second storage means (14).


**Revendications**

**1.** Procédé pour déterminer des écarts de mesure d'un analyseur de spectre optique (1;15;22), sur la base d'au moins une longueur d'onde ($\lambda_{Ri}$) sur la base d'au moins une raie de référence de longueur d'onde connue ($\lambda_{Ri}$) et possédant une largeur de bande spectrale connue ($\Delta\lambda_{R1}$), **caractérisé en ce que** la largeur de bande spectrale respective ($\Delta\lambda_{OSi}$) de l'analyseur de spectre optique (1;15;22) pour la longueur d'onde ($\lambda_{Ri}$) de la au moins une raie de référence est déterminée à partir de la largeur de bande spectrale connue ($\Delta\lambda_{Ri}$) de la au moins une raie de référence et à partir de la largeur de bande spectrale ($\Delta\lambda_{Mi}$) mesurée avec l'analyseur de spectre optique (1;15;22).

**2.** Procédé selon la revendication 1, **caractérisé en ce que** plusieurs largeurs de bandes spectrales ($\Delta\lambda_{OS1}$, $\Delta\lambda_{OS2}$, ..., $\Delta\lambda_{OSn}$) de l'analyseur de spectre optique (1; 15;22) sont déterminées sur la base de plusieurs raies de référence ayant des longueurs

d'onde connues ($\lambda_{R1}$, $\lambda_{R2}$, ..., $\lambda_{Rn}$) et des largeurs de bandes spectrales connues ($\Delta\lambda_{R1}$, $\Delta\lambda_{R2}$, ..., $\Delta\lambda_{Rn}$).

**3.** Procédé selon la revendication 1 ou 2, **caractérisé en ce que** la ou les largeurs de bandes spectrales ($\Delta\lambda_{OS1}$, $\Delta\lambda_{OS2}$, ..., $\Delta\lambda_{OSn}$), déterminées pour la ou les raies de référence, sont mémorisées en tant que données de calibrage de l'analyseur de spectre optique (1;15;22).

**4.** Procédé selon la revendication 1 ou 2, **caractérisé en ce qu'**un spectre optique mesuré avec l'analyseur de spectre optique (1;15;22) est corrigé ultérieurement sur la base des largeurs de bandes spectrales ($\Delta\lambda_{OS1}$, $\Delta\lambda_{OS2}$, ..., $\Delta\lambda_{OSn}$) déterminées pour les raies de référence.

**5.** Procédé selon l'une des revendications précédentes, **caractérisé en ce que** pour $\Delta\lambda_{Ri} <$ $\Delta\lambda_{Mi}$ (i = 1, 2, ..., n), la largeur de bande spectrale respective ($\Delta\lambda_{OSi}$) de l'analyseur de spectre optique (1;15;22) est réglée de manière à être approximativement égale à la largeur de bande spectrale mesurée ($\Delta\lambda_{Mi}$) de la i-ème raie de référence.

**6.** Procédé selon l'une des revendications 1 à 4, **caractérisé en ce que** pour $\Delta\lambda_{Ri} \geq \Delta\lambda_{Mi}$ (i = 1, 2, ..., n), la largeur de bande spectrale respective ($\Delta\lambda_{OSi}$) de l'analyseur de spectre optique (1;15;22) est déterminée par déconvolution.

**7.** Procédé selon l'une des revendications précédentes, **caractérisé en ce que** les largeurs de bandes spectrales pour d'autres longueurs d'onde sont déterminées par interpolation ou extrapolation des largeurs de bandes spectrales déterminées ($\Delta\lambda_{OS1}$, $\Delta\lambda_{OS2}$, ..., $\Delta\lambda_{OSn}$).

**8.** Procédé selon l'une des revendications précédentes, **caractérisé en ce que** la mesure du spectre de référence et la mesure du spectre de mesure s'effectuent simultanément ou l'une après l'autre.

**9.** Procédé selon l'une des revendications précédentes, **caractérisé en ce que** la ou les raies de référence sont présentes sous la forme de minima ou de maxima dans le spectre de référence.

**10.** Analyseur de spectre optique (1;15;20) pour la mise en oeuvre du procédé selon l'une des revendications précédentes, **caractérisé par**
une source de lumière de référence (9) ;
un premier moyen de mémoire (13) pour mémoriser les largeurs de bandes spectrales ($\Delta\lambda_{R1}$, $\Delta\lambda_{R2}$, ..., $\Delta\lambda_{Rn}$) d'une ou de plusieurs raies de référence connues de la source de lumière de référence (9) ;

des moyens (11) de détermination de largeur de bandes spectrales pour déterminer les largeurs de bandes spectrales ($\Delta\lambda_{M1}$, $\Delta\lambda_{M2}$, ..., $\Delta\lambda_{Mn}$) des raies de référence, mesurées avec l'analyseur de spectre optique (1;15;22), et des moyens (12) de détermination de largeurs de bandes spectrales pour déterminer des largeurs de bandes spectrales ($\Delta\lambda_{OS1}$, $\Delta\lambda_{OS2}$, ..., $\Delta\lambda_{OSn}$) de l'analyseur de spectre optique (1;15;22) à partir des largeurs de bandes spectrales connues ($\Delta\lambda_{R1}$, $\Delta\lambda_{R2}$, ..., $\Delta\lambda_{Rn}$) des raies de référence et à partir des largeurs de bandes spectrales ($\Delta\lambda_{M1}$, $\Delta\lambda_{M2}$, ..., $\Delta\lambda_{Mn}$) des raies de référence, mesurées avec l'analyseur de spectre optique (1;15; 22), pour les longueurs d'ondes respectives ($\lambda_{R1}$, $\lambda_{R2}$, ..., $\lambda_{Rn}$) des raies de référence.

**11.** Analyse de spectre optique selon la revendication 10, **caractérisé par** des seconds moyens de mémoire (14) pour mémoriser les largeurs de bandes spectrales déterminées ($\Delta\lambda_{OS1}$, $\Delta\lambda_{OS2}$, ..., $\Delta\lambda_{OSn}$) de l'analyseur de spectre optique (1;15;22) pour les longueurs d'onde respectives ($\lambda_{R1}$, $\lambda_{R2}$, ..., $\lambda_{Rn}$).

**12.** Analyseur de spectre optique selon la revendication 11, **caractérisé en ce qu'**initialement les largeurs de bandes spectrales sont mémorisées à partir d'un calibrage en usine, dans les seconds moyens de mémoire (14).

# Fig. 1

# Fig. 3

# Fig. 4